# EUROPEAN PATENT APPLICATION

(11) **EP 4 564 789 A1**
(43) Date of publication of application: **04.06.2025**
(21) Application number: 24216593.4
(22) Date of filing: 29.11.2024
(51) Int. Cl.: H04L 69/08, A01B 79/00, H04L 12/40

(54) **AGRICULTURAL IMPLEMENT COMPRISING PROTOCOL TRANSLATION FOR COMMUNICATING WITH ACTUATOR SYSTEMS**

(30) Priority: 01.12.2023 US 202363605363 P
(71) Applicant: Hengstler GmbH, 78554 Aldingen (DE); Specialty Product Technologies, 06460-000 Barueri, Sao Paulo (BR)
(72) Inventor: NOTTOLINI, Eduardo, 18087-180 Sao Paulo (BR); BATMEND, Misel, 06401 Stará Lubovna (SK); OLIVEIRA, Isaque, 06401-015 Barueri, Sao Paulo (BR)
(74) Representative: Cabinet Beaumont

(57) **Abstract**

An agricultural implement receives a power signal from a vehicle and comprises an implement control unit configured to exchange data conforming to a first communication protocol with a vehicle control unit. The implement further comprises at least one actuator system and a protocol translation unit that is configured to receive the power signal and information that is at least based upon data conforming to the first communication protocol. The protocol translation unit is operatively connected to the at least one actuator system via a wired connection, and configured to provide the power signal and the information according to a second communication protocol to the at least one actuator system. The protocol translation unit translates the information into the data conforming to the second communication protocol, and the wired connection comprises no more than two wires used to provide the power signal and the data conforming to the second communication protocol.

## Description

### FIELD

The present disclosure relates to communication protocols within an agricultural implements and, in particular, to an agricultural implement comprising protocol translation for communicating with actuator systems.

### BACKGROUND

Various agricultural implements that incorporate one or more actuator systems are known in the art. As used herein, an agricultural implement is a machine, operated in conjunction with a vehicle such as a tractor, used in agriculture for field work. In this context, an actuator system is typically an electro-mechanical assembly comprising an actuator (e.g., a motor) used to operate a mechanical device that performs a desired function.

Examples of such agricultural implements include, but are not limited to, planters and spreaders, both of which may incorporate one or more rotating mechanical components. In the case of a planter, to achieve best health and yield of crop per acre, it is necessary to plant seeds at a particular distance from each other. Planters pulled by a tractor through fields are often used for this purpose, where the planter includes mechanisms to open the soil and create at least one furrow (typically, several at the same time). The planter will include a seed storage operatively connected to a seed meter, where seeds are drawn into the sed meter from seed storage. The seed meter then isolates or singulates individual seeds and guides their movements such that each seed falls into a furrow in a controlled manner. A particular purpose of each seed meter is to ensure the presence of spaces of defined size between each of the seeds in order to optimize health and yield of the resulting crops.

There are different ways known in the art to singulate seeds though, most commonly, each seed meter will include a rotating disk having multiple cavities where individual seeds fit. Air pressure or vacuums are used to keep the seed in place on the rotating disk until such time that each cavity is aligned with an outlet such that each seed is able to fall by force of gravity into a corresponding furrow. Such rotating disks are driven by rotating drive sources that may be controlled in various ways.

In older planter technologies, the rotating drive sources comprised a rotating member connected by intervening linkages (e.g., chains) to a wheel contacting the ground and rotating based on the speed of the tractor and, hence, the planter. More recently, electric motors, such as brushless DC-motors, may be provided for each seed meter such that individual seed meters may be controlled to be turned on or off, or to rotate their respective disks at different speeds. Such individual control is desirable for various reasons, e.g., to turn off individual seed meters when passing over location which should not be planted (as in the case of overlapping of rows), to run at different speeds when the tractor is turning, thereby keeping the same distance between the planted seeds, or to allow for hybrid seed planting where two different seeds are planted simultaneously.

While such benefits of individually controlled seed meters are substantial, they do create added complexity. For example, power and control signals must be routed to each of the seed meters, which requires additional cabling and connectors that, in turn, adds to cost and provides multiple points of failure. Further, individual control of each seed meter requires the provision of continuous control data being provided to each seed meter.

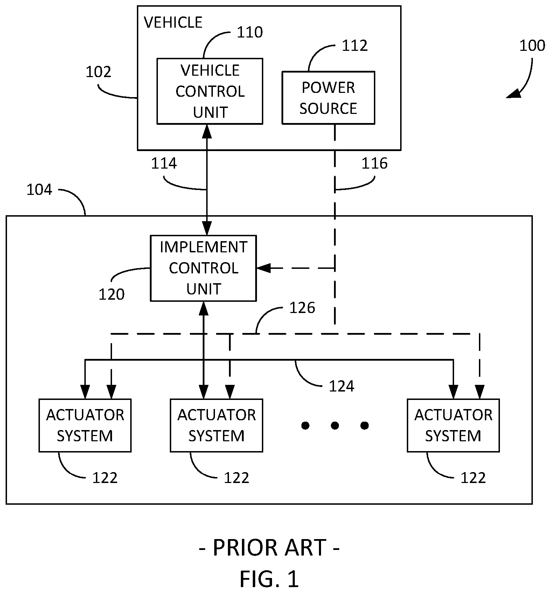

FIG. 1 illustrates a typical embodiment of an agricultural system 100 in accordance with prior art techniques and comprising a vehicle 102 operatively connected to an agricultural implement 104 that, in turn, comprises multiple actuator systems 122. As known in the art, the vehicle 102 typically comprises a vehicle control unit 110, which may comprise one or more suitable processing devices (e.g., a processor and corresponding memory having processor-executable instructions stored thereon and/or equivalents thereof). The vehicle control unit 110 will typically include a user interface (e.g., an interactive display; not shown) that allows an operator of the tractor to monitor and control various functions of the vehicle 102 (e.g., a tractor). Although not shown, the vehicle control unit 119 may also include various interfaces to sensors that permit the vehicle control unit 119 to receive data concerning operation of the vehicle 102, such as vehicle speed, vehicle location (via a Global Positioning System (GPS) receiver), etc. The vehicle control unit 110 further comprises a connection to a communication cable 114 that permits communication between the vehicle control unit 110 and an implement control unit 120, described below. The vehicle 112 also comprises a power source 112 and a suitable power connection 116 that permits an electrical power signal (e.g., 12 VDC or 24 VDC) to be transferred from the vehicle 102 to the agricultural implement 104.

The agricultural implement 104 comprises an implement control unit 120 that may also be implemented in a similar manner to the vehicle control unit 110, i.e., a processor and corresponding memory storing processor-executable instructions and/or equivalents thereof. The implement control unit 120 also provides an interface with the communication cable 114 such that the vehicle control unit 110 and implement control unit 120 are able to exchange data with each other. The implement control unit 120 is also in communication with the multiple actuator systems 122 via suitable cabling 124. The power connection 116 provided by the vehicle 102 supplies a power signal to the implement control unit 120 as well as the actuator systems 122 via additional power cabling 126.

Typically, the vehicle control unit 110 and implement control unit 120 communicate with each other in accordance with a first communication protocol, such as the well-known CANOPEN protocol or ISO 11783 protocol (often referred to as ISOBUS, in support of the SAE J19139 protocol protocol) or another proprietary protocol. Additionally, though not shown in FIG. 1, each of the actuator systems 122 may comprise a suitable processing device (as described previously) that terminates the same first communication protocol between the implement control unit 120 and each of the actuator systems. In this manner, the vehicle control unit 110 can provide data, e.g., vehicle speed, vehicle location, desired actuator operation data (e.g., seed meter disk speed, in the case of a planter), etc., that may be used by the implement control unit 120 to control operation of each of the actuator systems 122. In turn, for example, sensor data indicative of the state of each actuator system 122 provided by the respective actuator systems 122 (e.g., actual seed meter disk speeds, in the case of a planter) may be provided by the implement control unit 120 to the vehicle control unit 110.

As FIG. 1 makes clear, the provision of multiple sets of cabling 124, 126 can quickly become costly and complex as the number of actuator systems 122 increases. Further, as previously noted, the necessity of increased number of cabling connectors likewise increases the potential points of failure, which makes repairs in the event of equipment failure that much more complex.

In light of the above, techniques that overcome the above-noted limitations of prior art systems would represent a welcome addition to the art.

### SUMMARY

The above-described shortcomings are addressed through the provision of an agricultural implement in accordance with the instant disclosure. In an embodiment, an agricultural implement of the type configured for use with a vehicle comprising a vehicle control unit and configured to receive a power signal from the vehicle is provided. The agricultural implement comprises an implement control unit configured to be operatively connected to the vehicle control unit and to exchange data conforming to a first communication protocol with the vehicle control unit. The implement further comprises at least one actuator system and a protocol translation unit. The protocol translation unit is operatively connected to the implement control unit and configured to receive the power signal from the vehicle and information at least based upon the data conforming to the first communication protocol from the implement control unit. The protocol translation unit is also operatively connected to the at least one actuator system via a wired connection, and configured to provide the power signal and the information according to a second communication protocol to the at least one actuator system. The protocol translation unit is configured to perform translation of the information according to the second communication protocol. The wired connection comprises no more than two wires to provide the power signal and the information according to the second communication protocol to the at least one actuator.

In an embodiment, the first communication protocol is one of CANOPEN protocol or ISOBUS protocol and, in another embodiment, the second communication protocol is one of SCS OPEN LINK protocol, HIPERFACE DSL protocol, ENDAT 3.0 protocol or two-wire Ethernet protocol.

In an embodiment, the protocol translation unit comprises a first processing device separate from a second processing device constituting at least a portion of the implement control unit.

In an embodiment, each of the at least one actuator systems comprises a driver and an actuator, where the driver receives the according to the second communication protocol and determines, based on the information conforming to the second communication protocol, control signals used to control operation of the actuator. Further to this embodiment, the information can comprise at least one of commands or vehicle data conforming to the first communication protocol, wherein the driver is configured to determine the control signals based on the at least one of the commands or the vehicle data. In an alternative embodiment, the implement control unit is configured to determine the control signals, based on at least one of commands or vehicle data conforming to the first communication protocol. In this case, the information provided by the implement control unit to the protocol translation unit comprises the control signals, and the driver is configured to extract the control signals from the information according to the second communication protocol.

In an embodiment, the agricultural implement is a planter. In this embodiment, each of the at least one actuator system comprises a seed meter.

In an embodiment, the wired connection comprises a shielded cable.

In an embodiment, the protocol translation unit is further configured to perform translation of the data conforming to the second communication protocol into the data conforming to the first communication protocol, and to provide the data conforming to the first communication protocol to the implement control unit.

Corresponding methods are also described.

### BRIEF DESCRIPTION OF THE DRAWINGS

The foregoing and other features and advantages will be discussed in detail in the following non-limiting description of specific embodiments in connection with the accompanying drawings, wherein like reference numerals represent like elements and in which:
FIG. 1 is a schematic block diagram of an agricultural system in accordance with prior art techniques;
FIG. 2 is a schematic block diagram of an agricultural system in accordance with the instant disclosure; and
FIG. 3 is a schematic block diagram illustrating embodiments of a protocol translation unit and an actuator system in accordance with the instant disclosure.

### DETAILED DESCRIPTION OF THE PRESENT EMBODIMENTS

As used herein, phrases substantially similar to "at least one of A, B or C" are intended to be interpreted in the disjunctive, i.e., to require A or B or C or any combination thereof unless stated or implied by context otherwise. Further, phrases substantially similar to "at least one of A, B and C" are intended to be interpreted in the conjunctive, i.e., to require at least one of A, at least one of B and at least one of C unless stated or implied by context otherwise. Further still, the term "substantially" or similar words requiring subjective comparison are intended to mean "within manufacturing tolerances" unless stated or implied by context otherwise.

As used herein, the phrase "operatively connected" refers to at least a functional relationship between two elements and may encompass configurations in which the two elements are directed connected to each other, i.e., without any intervening elements, or indirectly connected to each other, i.e., with intervening elements.

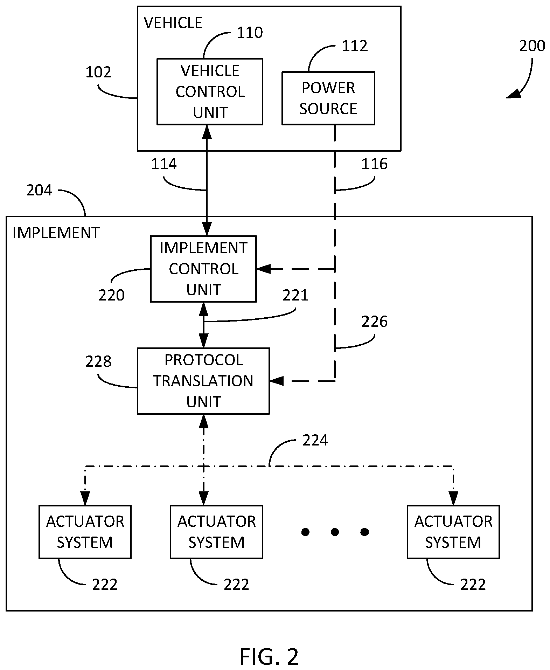

Referring now to FIG. 2, an agricultural system 200 in accordance with the instant disclosure is illustrated. In this embodiment, the vehicle 102 and its constituent components (vehicle control unit 110, power source 112, communication cable 114 and power connection 116) are structurally and functionally equivalent to those described above relative to FIG. 1.

In this embodiment, the agricultural implement 104 is modified to include a protocol translation unit 228 that is in communication with an implement control unit 220, and with a plurality of actuator systems 222 via a wired connection 224. The implement control unit 220 is similarly constructed to the implement control unit 120 described above relative to FIG. 1, and operates as before to communicate with the vehicle control unit 110 using a first communication protocol, such as the well-known CANOPEN or ISOBUS protocols or another proprietary protocol. However, in this case, the implement control unit 220 also communicates with the protocol translation unit 228 in order to effectuate communications between the implement control unit 220 and the actuator systems 222. It is noted that, although the protocol translation unit 228 is illustrated in FIG. 2 as being a separate device apart from the implement control unit 220, it is understood that this is not a requirement. For example, the protocol translation unit 228 could instead be implemented by the implement control unit 220 in conjunction with peripheral circuitry needed to implement the physical layer operation of the wired connection 224.

In this embodiment, the protocol translation unit 228 also receives the power signal via power cabling 226 from the vehicle 102. The plurality of actuator systems 222, however, do not directly receive the power signal via the power cabling 226, but instead receive the power signal (as well as data, as described in further detail below) via the wired connection 224. In this manner, the implement 204 can be constructed using a lesser number of cables going to the plurality of actuator systems 222, which lowers manufacturing expense of the implement 204. Furthermore, usage of fewer cables reduces the number of connectors and potential points of failure, thereby making the implement 204 more robust to sometimes harsh operating environments, as well as less complex and therefore more readily repairable in the event of malfunctions.

In an embodiment, the protocol translation unit 228 communicates with the plurality of actuator systems 222 using a second communication protocol compatible with the transmission of data over the same wires used to communicate the power signal from the protocol translation unit 228 to the actuator systems 222. Additionally, the second communication protocol is preferably selected to provide reliable, high speed connectivity in often difficult industrial environments. Well-known examples of such communication protocols include the SCS OPEN LINK protocol developed by Hengstler GmbH, the HIPERFACE DSL protocol developed by Sick Stegmann GmbH, the ENDAT 3.0 protocol developed by Dr. Johannes Heidenhain GmbH or a so-called two-wire Ethernet protocol such as Ethernet-APL developed by a collaboration of standards development organizations and industry participants. It is noted that at least the SCS OPEN LINK, HIPERFACE DSL and ENDAT 3.0 protocols are primarily used in conjunction with motion encoders system for the control of various actuator type devices (e.g., motors, linear actuators, etc.). However, in the context of the instant disclosure, these protocols are relied upon as general communication protocols such that desirable data to be used in controlling actuator systems in agricultural implements may be more efficiently communicated within the agricultural implements themselves.

As noted, a feature of these second communication protocols is that they are compatible with the provision of both power and data signals using only two wire (sometimes referred to as a "twisted pair"). Thus, in an embodiment, the wired connection 224 is implemented as such a twisted pair. Further, such a twisted pair may be provided in the form of a shielded cable, in order to minimize electrical interference, as known in the art. Because these protocols facilitate the combined transmission of power and data signals in minimal, two wire fashion, the complexity of prior art solutions (as depicted in FIG. 1) may be reduced or avoided. Further, because only two wires are required in this embodiment, connectors between cables used to implement the wired connection 224 may be of simpler construction and therefore correspondingly less expensive and less prone to failure.

The protocol translation unit 228, which may be implemented using a suitable processing device as described above, is further configured to perform translations of information, received from the implement control unit 220, at least based upon the data conforming to the first communication protocol into the second communication protocol for data being sent from the vehicle control unit 110 for use in operating the actuator systems 222. Oppositely, the protocol translation unit 228 may also operate to perform translations of data conforming to the second communication protocol into the first communication protocol for data originated by the actuator systems 222 (e.g., sensor data) to be sent to the vehicle control unit 110. Techniques for performing such translations are known to those skilled in the art and will necessarily depend on the nature of the data being transmitted (e.g., the minimum frequency of its transmission, the bandwidth required to transmit the data, etc.) as well as the capabilities and formatting required by the respective first and second communication protocols (e.g., timing requirements for specific types of data, minimum or maximum data transmission rates, etc.).

In operation, the system 200 operates based on control instructions for the actuator systems 222 created by the vehicle control unit 110, which instructions are communicated (according to the first communication protocol) to the implement 204 where they are subsequently converted into commands used to effectuate specific desired operation of individual actuator systems 222 to implement the control instructions. For example, in the context of a planter, such a command could be the "Spacing Application Rate" command as known in the art, whereby a user (e.g., the driver of the vehicle 102) can set the distance between seeds to be a certain value. Using well-known features of the SAE J1939 protocol (e.g., Parameter Group Number (PGN) 51968, which includes Suspect Parameter Number (SPN) 5201 defining the Spacing Application Rate command), this command is provided by the vehicle control unit 110, along with other relevant vehicle data (e.g., vehicle speed as provided by a different SPN within the provided PGN) to the implement control unit 220. Again using known techniques, the implement control unit 220 can decode the provided PGN/SPN data to determine any necessary command (for controlling an actuator) to be provided to the one or more actuator systems 222. While the above is one example, those skilled in the art will appreciate that there are numerous such commands available and which may be used in conjunction with the presently disclosed techniques.

Thus, at the vehicle control unit 110, data implementing the instructions originated by the vehicle control unit 110 is encoded in accordance with the first communication protocol, along with other vehicle-specific operation data (e.g., current vehicle speed, current vehicle location, current vehicle heading) and transmitted to the implement control unit 220 via the communication cable 114. At the implement control unit 220, the received command and accompanying data according to the first communication protocol is extracted and interpreted, in accordance with known techniques, to generate commands to control (or obtain data from) the one or more actuator systems 222. Thereafter, the actuator-specific commands are provided to the protocol translation unit 228 for encoding according to the second communication protocol. For example, when the implement control unit 220 receives an input, according to the first communication protocol, to set the spacing application rate to a 1 seed/meter, the implement control unit 220 can operate to calculate (based on tractor velocity, using known techniques) the necessary rotations per minute (RPM) of each actuator (motor) with the actuator systems 222 to achieve the correct dispensing rate. This information is then provided to the protocol translation unit 228 to encode this information according to the second communication protocol. Thus, in this example, the protocol translation unit 228 converts the necessary actuator control instruction, e.g., "set motor 1 to 50 RPM," instead of the raw "seed/meter" value. In this manner, the burden placed on each actuator system 222 is reduced to the extent that processing capability available at each actuator system 222 is not required to directly decode the first communication protocol, thereby reducing the necessary processing power of each actuator system 222.

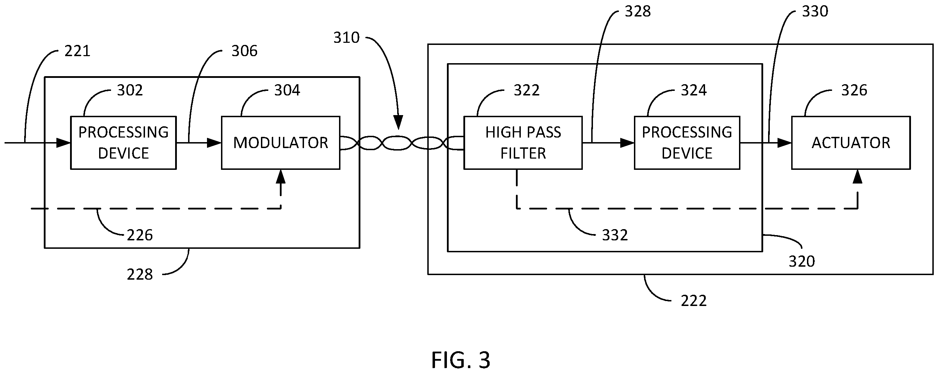

At the protocol translation unit 228, the information that is at least based on the data conforming to the first communication protocol is received and translated into the second communication protocol as needed. The resulting translated data conforming to the second communication protocol is the provided by the protocol translation unit 228 to one or more of the actuator systems 222. As described in greater detail below with regard to FIG. 3, when sending data to one or more actuator systems 222, the protocol translation unit 228 operates to superimpose such data onto a power signal received by the protocol translation unit 228 (via the power cabling 226) and forwarded to the respective actuator systems 222 via the wired connection 224.

Although the examples described above are premised on the implement control unit 220 interpreting at least one of command or vehicle data to determine actuator control signals that are then provided to the protocol translation unit 228, this is not a requirement. In fact, the protocol translation unit 228 may be operated in a manner in which it can be ignorant of the type of data it is being provided. In other words, the protocol translation unit 228 can operate to encode whatever data it receives into the second communication protocol regardless of the data type or prior encoding. Thus, for example, the information at least based on the data conforming to the second protocol mentioned above could instead comprise the at least one of the command or vehicle data conforming to the first communication protocol. In this case, the one or more actuator systems 222 may be configured to be capable of performing the determination attributed above to the implement control unit 220, i.e., interpreting the received commands/vehicle data conforming to the first communication protocol and determining actuator control signals based thereon.

Further still, the protocol translation unit 228 may also operate in the opposite direction. That is, the protocol translation unit 228 can receive data one or more of the actuator systems 222 (via the wired connection 224), which data conforms to the second communication protocol. The protocol translation unit 228 then translates such received data into the first communication protocol and thereafter provides the translated data conforming to the first communication protocol to the implement control unit 220, which can thereafter transmit the translated data to the vehicle control unit 110.

FIG. 3 illustrates further details, albeit in simplified form, of a protocol translation unit 228 and an actuator system 222 in accordance with the instant disclosure. Thus, in an embodiment, the protocol translation unit 228 comprises a processing device 302, which may be implemented as described above. The processing device 302 receives the information 221 at least based upon data conforming to the first communication protocol and operates to translate such information 221 into data 306 conforming to the second communication protocol as described above. The processing device 302 then provides the translated data to a modulator 304 that is also configured to receive the power signal from the cabling 226. In accordance with known techniques, the modulator 304 imposes the translated data 306 onto the power signal, i.e., the power signal is essentially converted into a carrier signal.

Again using known techniques, the modulator 304 causes the modulated power signal to be transmitted via a twisted pair 310 to the actuator system 222. As shown, the actuator system 222 comprises a driver 320 operatively connected to an actuator 326. The driver 320 is configured to receive the modulated power signal from the twisted pair 310. The modulated power signal is passed on to a high pass filter 322 where the comparatively higher frequency components (resulting from the translated data 306) of the modulated power signal are separated from the underlying power signal 332 and provided to a processing device 324 (again, as described above) as demodulated and translated data 328 conforming to the second communication protocol. Simultaneously, the extracted power signal 332 is provided to the actuator 326 (and, though not shown in FIG. 3, any other components in the actuator system 222 including the processing device 324). The processing device 324 is configured to either translate the data conforming to the second communication protocol 328 into control signals 330 that may be used to control operation of the actuator 326, or to directly extract such control signals from the received data conforming to the second communication protocol 328.

While the various embodiments in accordance with the instant disclosure have been described in conjunction with specific implementations thereof, it is evident that many alternatives, modifications and variations will be apparent to those skilled in the art. Accordingly, the preferred embodiments of the invention as set forth herein are intended to be illustrative only and not limiting so long as the variations thereof come within the scope of the appended claims and their equivalents.

## Claims

1. An agricultural implement of the type configured for use with a vehicle comprising a vehicle control unit and configured to receive a power signal from the vehicle, the implement comprising:
an implement control unit configured to be operatively connected to the vehicle control unit and to exchange data conforming to a first communication protocol with the vehicle control unit;
at least one actuator system; and
a protocol translation unit:
operatively connected to the implement control unit, the protocol translation unit configured to receive the power signal from the vehicle and to receive, from the implement control unit, information at least based upon the data conforming to the first communication protocol, and
operatively connected to the at least one actuator system via a wired connection, the protocol translation unit configured to provide, to the at least one actuator system, the power signal and the information according to a second communication protocol,
wherein the protocol translation unit is configured to perform translation of the information according to the second communication protocol,
and wherein the wired connection comprises no more than two wires to provide the power signal and the information according to the second communication protocol.

2. The agricultural implement of claim 1, wherein the first communication protocol is one of CANOPEN protocol or ISOBUS protocol.

3. The agricultural implement of claim 1, wherein the second communication protocol is one of SCS OPEN LINK protocol, HIPERFACE DSL protocol, ENDAT 3.0 protocol or two-wire Ethernet protocol.

4. The agricultural implement of claim 1, wherein the protocol translation unit comprises a first processing device separate from a second processing device constituting at least a portion of the implement control unit.

5. The agricultural implement of claim 1, wherein each of the at least one actuator systems comprises a driver and an actuator, and wherein the driver receives the information conforming to the second communication protocol and determines, based on the information conforming to the second communication protocol, control signals used to control operation of the actuator.

6. The agricultural implement of claim 5, wherein the information comprises at least one of commands or vehicle data conforming to the first communication protocol, and wherein the driver is configured to determine the control signals based on the at least one of the commands or vehicle data.

7. The agricultural implement of claim 5,
wherein the implement control unit is configured to determine the control signals, based on at least one of commands or vehicle data conforming to the first communication protocol,
wherein the information provided by the implement control unit to the protocol translation unit comprises the control signals, and
wherein the driver is configured to extract the control signals from the information according to the second communication protocol.

8. The agricultural implement of claim 1, wherein the agricultural implement is a planter.

9. The agricultural implement of claim 8, wherein each of the at least one actuator system comprises a seed meter.

10. The agricultural implement of claim 1, wherein the wired connection comprises a shielded cable.

11. The agricultural implement of claim 1, wherein the protocol translation unit is further configured to perform translation of the data conforming to the second communication protocol into the data conforming to the first communication protocol, and to provide the data conforming to the first communication protocol to the implement control unit.

12. A method in an agricultural implement of the type configured for use with a vehicle comprising a vehicle control unit and configured to receive a power signal from the vehicle, the method comprising:
receiving, from the vehicle control unit by an implement control unit configured to be operatively connected to the vehicle control unit, data conforming to a first communication protocol;
providing, by the implement control unit to a protocol translation unit, information based at least upon the data conforming to the first communication protocol;
receiving, by the protocol translation unit from the vehicle, the power signal;
translating, by the protocol translation unit, the information according to a second communication protocol;
providing, by the protocol translation unit to at least one actuator system operatively connected to the protocol translation unit via a wired connection, the power signal and the information according to the second communication protocol,
wherein the wired connection comprises no more than two wires used to provide the power signal and the information according to the second communication protocol.

13. The method of claim 12, wherein the first communication protocol is one of CANOPEN protocol or ISOBUS protocol.

14. The method of claim 12, wherein the second communication protocol is one of SCS OPEN LINK protocol, HIPERFACE DSL protocol, ENDAT 3.0 protocol or two-wire Ethernet protocol.

15. The method of claim 12, wherein the information comprises at least one of commands or vehicle data conforming to the first communication protocol.

16. The method of claim 12, wherein the information provided by the implement control unit to the protocol translation unit comprises control signals used to control one or more actuators of the at least one actuator system.

17. The method of claim 12, further comprising:
receiving, by the protocol translation unit from the at least one actuator system via the wired connection, received data conforming to the second communication protocol;
translating, by the protocol translation unit, the received data conforming to the second communication protocol into translated data conforming to the first communication protocol; and
providing, by the protocol translation unit, the translated data confirming to the first communication protocol to the implement control unit.
